# EUROPEAN PATENT APPLICATION

(11) **EP 2 610 730 A1**
(43) Date of publication of application: **03.07.2013**
(21) Application number: 12189926.4
(22) Date of filing: 25.10.2012
(51) Int. Cl.: G06F 3/06, G06F 11/20

(54) **Storage apparatus and method for controlling storage apparatus**

(30) Priority: 26.12.2011 JP 2011284225
(71) Applicant: FUJITSU LIMITED, Kawasaki-shi, Kanagawa 211-8588 (JP)
(72) Inventor: Honjo, Nobuyuki, Kanagawa, 211-8588 (JP); Otaka, Atsuhiro, Kanagawa, 211-8588 (JP); Katano, Atsushi, Kanagawa, 211-8588 (JP)
(74) Representative: HOFFMANN EITLE

(57) **Abstract**

A storage apparatus (1) includes a map CM (100) and CMs (200a∼200c). The map CM (100) includes an acquisition unit (122), an update unit (123), and a notification unit (124). When the structure of the storage apparatus (1) is changed, the acquisition unit (122) acquires new map information from each expander (300a, 300b) or from each expander (300a, 300b) and each enclosure (10a∼10c, 20a∼20c, 30a∼30c). Then, the update unit (123) updates the map information stored in a map information table storage unit (111) based on the acquired new map information. The notification unit (124) notifies the acquired new map information to other CMs (200a∼200c). The CMs (200a∼200c) each include an update unit (221). The update unit (221) updates the map information stored in a map information table storage unit (211) based on the new map information notified by the map CM (100).

## Description

### FIELD

The embodiments discussed herein are related to a storage apparatus and a method for controlling the storage apparatus.

### BACKGROUND

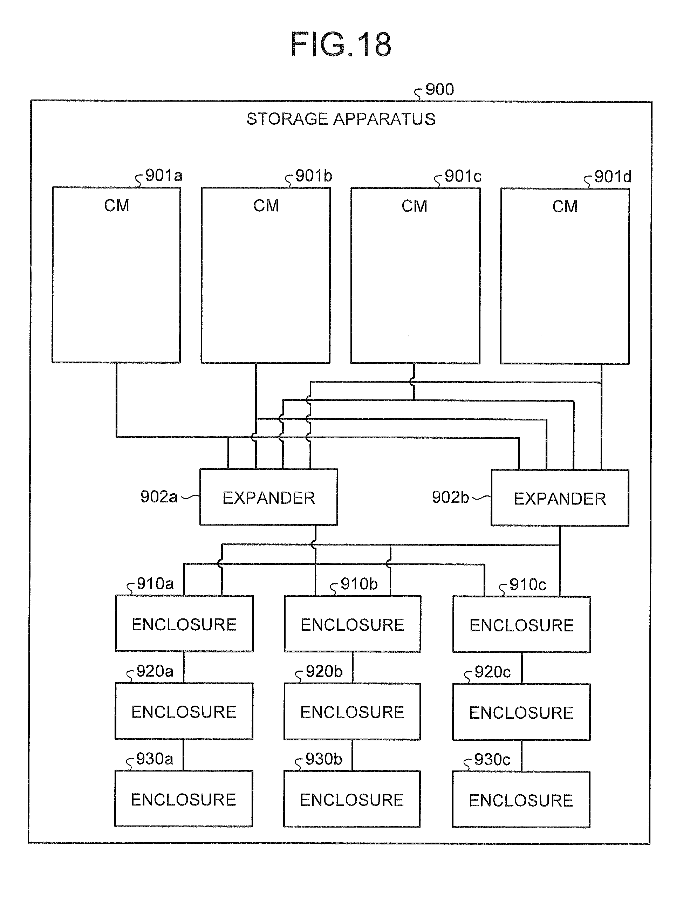

There is a storage apparatus that employs the SAS (Serial Attached SCSI) standard serializing a transfer system with SCSI (Small Computer System Interface) to connect a storage device such as a disk device. A structure of the storage apparatus employing the SAS standard according to a related technique will be described with reference to FIG. 18.

FIG. 18 is a diagram illustrating an exemplary structure of the storage apparatus employing the SAS standard according to a related technique. As illustrated in FIG. 18, a storage apparatus 900 includes CMs (Control Module) 901a to 901d that control input and output, and expanders 902a to 902b having a switch function and a disk expansion function. The storage apparatus 900 includes enclosures 910a to 910c, 920a to 920c and 930a to 930c that store a plurality of disk devices.

In the storage apparatus 900, each device is connected in a hierarchy structure. For example, the expanders 902a and 920b are connected to each CM, and the enclosures 910a to 910c are connected to each of the expanders 902a and 902b. The enclosure 920a is connected to the enclosure 910a and the enclosure 930a is connected to the enclosure 920a. The devices on the side of the CMs 901a to 901d are called upper devices and the devices on the side of the enclosures 930a to 930c are called lower devices. For example, the expander 902a is an upper device relative to the enclosure 910a and the enclosure 910a is a lower device relative to the expander 902a.

In the storage apparatus 900, each CM, each expander and each enclosure have map information indicating the structure of the storage apparatus. For example, when receiving an input/output request from an information processing apparatus such as a server, the CM 901a performs a processing of reading data from a disk device or a processing of writing data into the disk device with reference to the map information.

When the structure of the storage apparatus is changed due to removal of a failed disk device or addition of a disk device for maintenance in the storage apparatus 900, a discovery processing of newly updating the map information is performed.

The discovery processing will be described below with reference to an example where a disk device in the enclosure 930a is removed. The enclosure 930a issues Broadcast (Change) (which will be denoted by BC (CHG) below) as a command indicating that the structure of the storage apparatus has been changed, and transmits it to the enclosure 920a. The BC (CHG) is sequentially transmitted to the upper devices and finally transmitted to the CMs 901a to 901d.

An upper device having received BC (CHG) requests, to a lower device, the map information indicating the number of physical links and the number of devices connected to the physical links, and acquires new map information from the lower device. When requested to acquire map information from an upper device, the device having acquired the new map information returns the new map information to the upper device. For example, in the storage apparatus 900, each CM requests the expanders 902a and 902b to acquire map information and acquires the new map information from the expanders 902a and 902b.

While a lower device is performing the discovery processing, the upper device having received the BC (CHG) does not perform the discovery processing and is in a standby state. Thereby, for example, there is known a technique that forcibly completes the discovery processing when an abnormality occurs in the enclosure 920a and the discovery processing has not been completed even after a predetermined time.

Patent Literature 1: Japanese Laid-open Patent Publication No. 2011-129052

However, the above related technique has a problem that the discovery processings concentrate on the expanders.

Specifically, when many CMs are connected to an expander, each CM transmits a command of requesting map information to its controlling expander. In the example illustrated in FIG. 18, the expander 902a receives a request of acquiring map information from the CMs 901a to 901d.

When the expander 902a receives a discovery processing beyond its processing capability, the discovery processings received from the CMs are competitive. Consequently, a stable operation of the system can be affected, such as delay in acquiring map information, timeout, and erroneous judgment that a no-response expander is a failed module in a CM.

According to one aspect, it is an object to provide a storage apparatus and a method for controlling the storage apparatus for preventing discovery processings from concentrating on an expander.

### SUMMARY

According to an aspect of the embodiments, a storage apparatus includes a storage device, a plurality of control devices that control an access from an external device to the storage device, and a relay device that is connected to the plurality of control devices and relays an access from the plurality of control devices to the storage device,
wherein the plurality of control devices each includes:
a first control device including:
   a storage unit that stores structure information indicating a structure of the storage apparatus;
   an acquisition unit that, when the structure is changed, acquires new structure information from the relay device or from the relay device and the storage device;
   an update unit that updates the structure information stored in the storage unit based on the acquired new structure information; and
   a notification unit that notifies the acquired new structure information to other control devices; and
   a second control device including:
      a storage unit that stores the structure information indicating the structure of the storage apparatus; and
      an update unit that updates the structure information stored in the storage unit based on the new structure information notified by the first control device.

### BRIEF DESCRIPTION OF DRAWINGS

FIG. 1 is a block diagram illustrating a structure of a storage apparatus;
FIG. 2 is a functional block diagram illustrating a functional structure of a map CM according to a first embodiment;
FIG. 3 is a functional block diagram illustrating a functional structure of a CM according to the first embodiment;
FIG. 4 is a functional block diagram illustrating a functional structure of an expander according to the first embodiment;
FIG. 5 is a flowchart illustrating a processing procedure by the storage apparatus according to the first embodiment;
FIG. 6 is a flowchart illustrating a processing procedure of map information acquisition processings by the map CM according to the first embodiment;
FIG. 7 is a flowchart illustrating a processing procedure of map CM change processings by the CM according to the first embodiment;
FIG. 8 is a flowchart illustrating a processing procedure of port setting processings by the expander according to the first embodiment;
FIG. 9 is a flowchart illustrating a processing procedure of BC (CHG) transfer processings by the expander according to the first embodiment;
FIG. 10 is a functional block diagram illustrating a functional structure of a map CM according to a second embodiment;
FIG. 11 is a flowchart illustrating a processing procedure by a storage apparatus according to the second embodiment;
FIG. 12 is a flowchart illustrating a processing procedure of map information acquisition processings by the map CM according to the second embodiment;
FIG. 13 is a flowchart illustrating a processing procedure of port setting processings by an expander according to the second embodiment;
FIG. 14 is a flowchart illustrating a processing procedure of BC (CHG) transfer prohibition processings by the expander according to the second embodiment;
FIG. 15 is a functional block diagram illustrating a functional structure of a map CM according to a third embodiment;
FIG. 16 is a flowchart illustrating a processing procedure by a storage apparatus according to the third embodiment;
FIG. 17 is a flowchart illustrating a processing procedure of port setting processings by an expander according to the third embodiment; and
FIG. 18 is a diagram illustrating an exemplary structure of a storage apparatus employing the SAS standard according to a related technique.

### DESCRIPTION OF EMBODIMENTS

Preferred embodiments of the present invention will be explained with reference to accompanying drawings. The present invention is not limited to the embodiments. Each embodiment may be combined as needed without departing from the scope of the processing contents.

### [a] First Embodiment

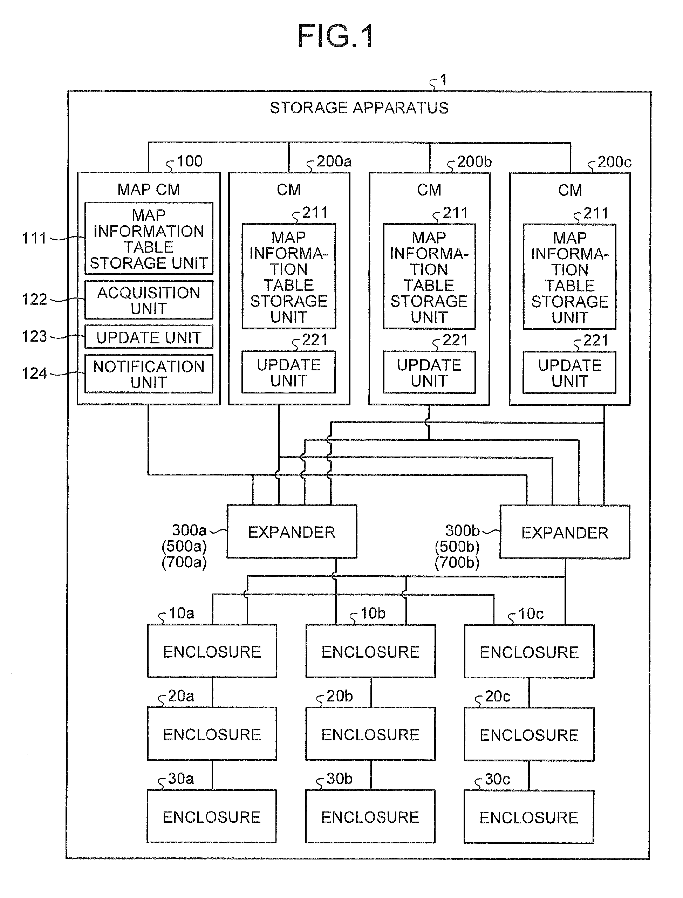

A structure of the storage apparatus, processing flows and effects according to a first embodiment will be described with reference to FIGS. 1 to 9.

### Structure of storage apparatus according to first embodiment

FIG. 1 is a block diagram illustrating a structure of a storage apparatus. As illustrated in FIG. 1, a storage apparatus 1 includes enclosures 10a to 10c, 20a to 20c and 30a to 30c, a map CMs (Control Module) 100, CMs 200a to 200c, and expanders 300a and 300b. The map CM has the same functions as the CM in the normal time, and acquires map information on behalf of the CMs when the structure of the storage apparatus is changed. The numbers of CMs, expanders and enclosures in the storage apparatus 1 are not limited to those in the example illustrated in FIG. 1 except that the storage apparatus 1 has one map CM. The map CM 100 will be described as being set by a manager on startup of the storage apparatus 1.

The map CM 100 and the CMs 200a to 200c are connected with each other via a bus to be communicable. Each of the map CM 100 and the CMs 200a to 200c is connected to the expander 300a and the expander 300b via the SAS (Serial Attached SCSI) interface to be communicable. The expanders 300a and 300b are connected to the enclosures 10a to 10c via the SAS to be communicable.

The enclosure 10a is connected to the enclosure 20a via the SAS to be communicable. The enclosure 20a is connected to the enclosure 30a via the SAS to be communicable. That is, the enclosures 10a to 30a are connected via the SAS in a hierarchy structure. The enclosures 10b to 30b and 10c to 30c are connected via the SAS in a hierarchy structure similar to the enclosures 10a to 30a.

The devices on the side of the map CM 100 and the CMs 200a to 200c in the storage apparatus 1 will be denoted by upper devices and the devices on the side of the enclosures 30a to 30c will be denoted by lower devices as needed. For example, the enclosures 10a to 10c are the upper devices relative to the enclosures 20a to 20c, and the enclosures 20a to 20c are the lower devices relative to the enclosures 10a to 10c.

The enclosure 10a stores a storage device such as a disk device therein. The enclosures 10b, 10c, 20a to 20c, and 30a to 30c each store a storage device such as a disk device similar to the enclosure 10a.

The map CM 100 and the CMs 200a to 200c control an access from an information processing apparatus such as a server (not illustrated) to the storage devices. The expanders 300a and 300b are connected to the map CM 100 and the CMs 200a to 200c, and relay an access from the map CM 100 and the CMs 200a to 200c to the storage devices.

The map CM 100, each CM, each expander and each enclosure in the storage apparatus 1 have map information indicating the structure of the storage apparatus. For example, when receiving an input/output request from an information processing apparatus such as a server, the CM 200a performs a processing of reading data from the storage device or a processing of writing data into the storage device with reference to the map information.

In the thus-configured storage apparatus 1, when the structure of the storage apparatus is changed due to removal of a failed disk device or addition of a disk device for maintenance, a discovery processing of newly updating the map information is performed. An explanation will be made below assuming that when the structure of the storage apparatus is changed, each expander and each enclosure in the storage apparatus 1 employ a self-discovery mode of registering and updating the map information therein.

The map CM 100 includes an acquisition unit 122, an update unit 123 and a notification unit 124. When the structure of the storage apparatus 1 is changed, the acquisition unit 122 acquires new map information from the expanders 300a and 300b. The update unit 123 updates the map information stored in a map information table storage unit 111 based on the new map information. Then, the notification unit 124 notifies the acquired new map information to other CMs 200a to 200c.

The CM 200a includes an update unit 221. The update unit 221 updates the map information stored in a map information table storage unit 211 based on the new map information notified by the map CM 100.

In this way, when the structure of the storage apparatus 1 has been changed, the map CM 100 in the storage apparatus 1 acquires map information, and notifies the acquired map information to the CMs 200a to 200c. Thereby, in the storage apparatus 1, the discovery processings do not concentrate on the expanders 300a and 300b.

### Structure of map CM according to first embodiment

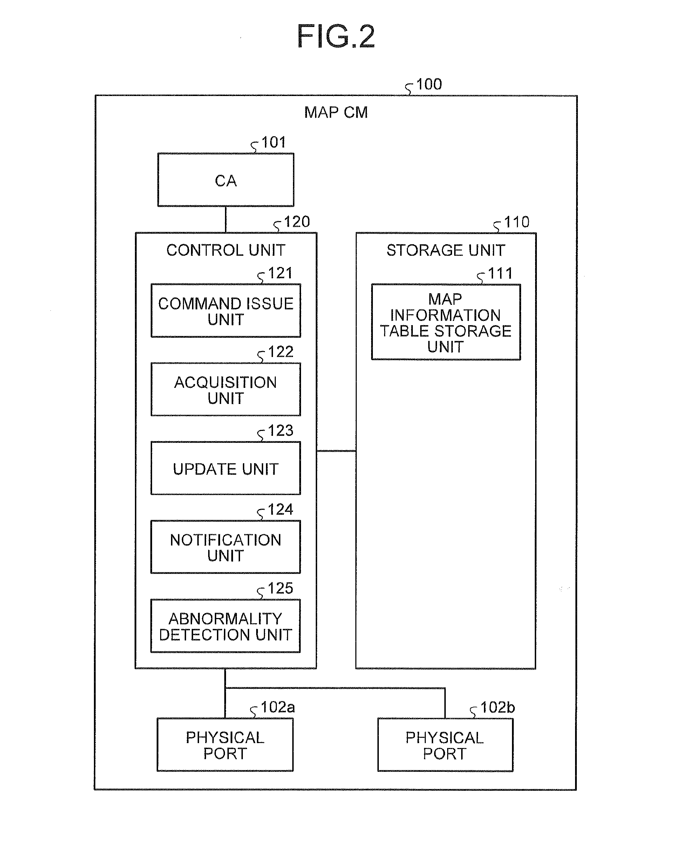

A structure of the map CM 100 will be described below with reference to FIG. 2. FIG. 2 is a functional block diagram illustrating a functional structure of the map CM according to the first embodiment. In the figure, only the structure relating to the functions set for the map CM will be illustrated.

As illustrated in FIG. 2, the map CM 100 includes a CA (channel adapter) 101, physical ports 102a, 102b, a storage unit 110, and a control unit 120.

The CA 101 is an interface that exchanges information with an information processing apparatus such as a server (not illustrated) or other CMs. The physical ports 102a and 102b are an interface in the SAS standard, and control exchanging information with the expanders 300a and 300b.

The storage unit 110 is a semiconductor memory device such as RAM, and includes the map information table storage unit 111. The map information table storage unit 111 stores map information indicating the structure of the storage apparatus 1 therein. For example, the map information table storage unit 111 stores therein, as the information indicating the structure of the storage apparatus 1, information in which the number of physical links in each device in the storage apparatus 1 is associated with the number of devices connected to the physical links.

The control unit 120 is an electronic circuit such as CPU (Central Processing Unit) or MPU (Micro Processing Unit), and includes a command issue unit 121, the acquisition unit 122, the update unit 123, the notification unit 124, and an abnormality detection unit 125.

When the structure of the storage apparatus 1 is changed, the command issue unit 121 transmits, to each expander, an issue request of issuing Broadcast (Change) (which will be denoted as BC (CHG) below) indicating that the structure of the storage apparatus 1 is changed only to the map CM. For example, the command issue unit 121 transmits, to each expander, an issue request containing an identifier of the map CM such as a SAS address, or a port number.

When the structure of the storage apparatus 1 is changed, the acquisition unit 122 acquires new map information from the expanders 300a and 300b. For example, when receiving BC (CHG) from the expander 300a or 300b, the acquisition unit 122 acquires new map information from the expanders 300a and 300b. The acquisition unit 122 outputs the acquired new map information to the update unit 123 and the notification unit 124.

The update unit 123 updates the map information stored in the map information table storage unit 111 based on the new map information acquired by the acquisition unit 122. The notification unit 124 notifies the new map information acquired by the acquisition unit 122 to other CMs.

The abnormality detection unit 125 and other CMs alternately monitor whether the abnormality detection unit is communicable with other CMs. The abnormality detection unit 125 monitors a voltage and a temperature of the map CM, and determines whether an abnormality has occurred in the map CM. When determining that an abnormality has occurred in the map CM, the abnormality detection unit 125 notifies, to other CMs, that an abnormality in the map CM has been detected.

### Structure of CM according to first embodiment

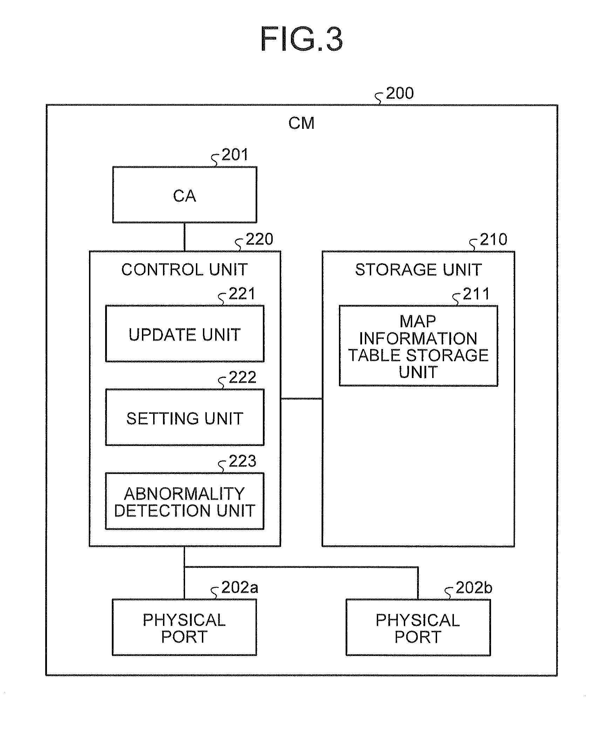

A structure of the CMs 200a to 200c will be described below with reference to FIG. 3. In the figure, only the structure relating to the functions not set for the map CM will be illustrated. Herein, the CMs 200a to 200c are collectively denoted by a CM 200.

FIG. 3 is a functional block diagram illustrating a functional structure of the CM according to the first embodiment. As illustrated in FIG. 3, the CM 200 includes a CA 201, physical ports 202a, 202b, a storage unit 210, and a control unit 220.

The CA 201 is an interface that exchanges information with an information processing apparatus such as a server (not illustrated) or other CMs. The physical ports 202a and 202b are an interface in the SAS standard, and control exchanging information with the expanders 300a and 300b.

The storage unit 210 is a semiconductor memory device such as RAM, and includes the map information table storage unit 211. The map information table storage unit 211 has the same contents as the map information table storage unit 111, and stores information indicating the structure of the storage apparatus 1 therein.

The control unit 220 is an electronic circuit such as CPU or MPU, and includes the update unit 221, a setting unit 222, and an abnormality detection unit 223.

The update unit 221 updates the map information stored in the map information table storage unit 211 based on the new map information notified by the map CM 100.

When an abnormality occurs in the map CM 100, the setting unit 222 selects a normally-operable device from among the CMs other than the map CM 100, and sets it as a map CM 100. For example, when it is determined that the abnormality detection unit 223 has detected an abnormality in the map CM 100, the setting unit 222 acquires the states of all the CMs. The state of the CM contains a voltage, a temperature and a communication state, and indicates information as to whether the CM is operable.

The setting unit 222 compares the acquired states of the CMs, and selects a CM which may operate most safely based on the acquired states of the CMs as the map CM 100. The setting unit 222 determines whether its CM has been selected as the map CM 100. When determining that the CM has been selected as the map CM 100, the setting unit 222 changes the setting of its CM to that for the map CM 100.

The abnormality detection unit 223 and the map CM 100 monitor whether the CM is communicable with the map CM 100, and determines whether an abnormality in the map CM 100 has been detected. When the CM is communicable with other CMs but is not communicable with the map CM 100 or when notified that an abnormality has occurred from the map CM 100, the abnormality detection unit 223 notifies that an abnormality has occurred in the map CM 100 to the setting unit 222.

The abnormality detection unit 223 and its CM alternately monitor whether the CM is communicable with other CMs. The abnormality detection unit 223 monitors a voltage and a temperature of its CM, and determines whether an abnormality has occurred in the CM. When determining that an abnormality has occurred in the CM, the abnormality detection unit 223 notifies, to other CMs, that an abnormality in the CM has been detected.

### Structure of expander according to first embodiment

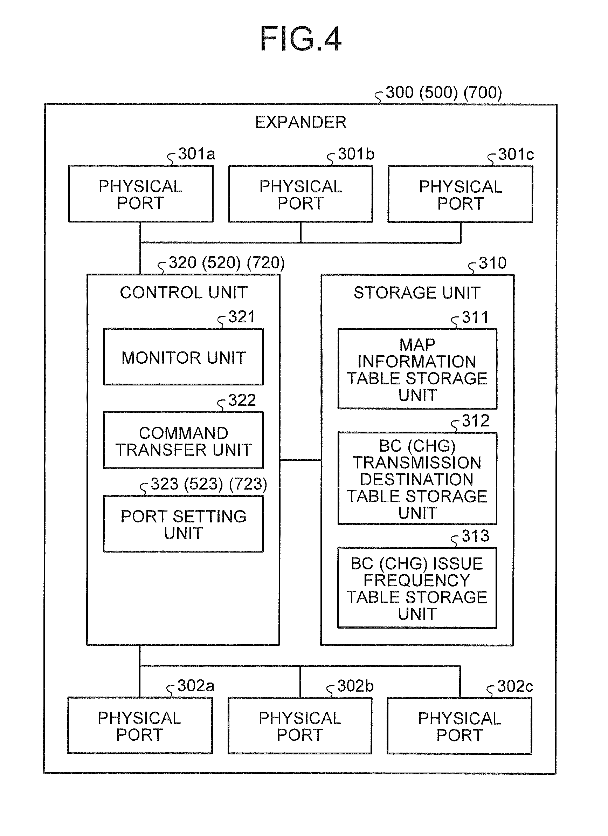

A structure of the expanders 300a and 300b according to the first embodiment will be described below with reference to FIG. 4. Herein, the expanders 300a and 300b will be collectively denoted by a expander 300. FIG. 4 is a functional block diagram illustrating a functional structure of the expander according to the first embodiment.

As illustrated in FIG. 4, the expander 300 includes physical ports 301a to 301c, physical ports 302a to 302c, a storage unit 310, and a control unit 320. The physical ports 301a to 301c are an interface in the SAS standard, and control exchanging information with the map CM 100 and the CMs 200a to 200c. The physical ports 302a to 302c are an interface in the SAS standard, and control exchanging information with the enclosures 10a to 10c.

The storage unit 310 is a semiconductor memory device such as RAM, and includes a map information table storage unit 311, a BC (CHG) transmission destination table storage unit 312, and a BC (CHG) issue frequency table storage unit 313. The map information table storage unit 311 stores the information indicating the structure of the storage apparatus 1 therein similar to the map information table storage unit 111.

The BC (CHG) transmission destination table storage unit 312 stores a port number or a SAS address for a transmission destination of the BC (CHG) in an associated manner. The BC (CHG) transmission destination table storage unit 312 is set by a port setting unit 323 described later.

The BC (CHG) issue frequency table storage unit 313 stores the frequency of issues of BC (CHG). The BC (CHG) issue frequency table storage unit 313 stores therein "3" indicating that BC (CHG) has been issued three times. The BC (CHG) issue frequency table storage unit 313 is updated by a command transfer unit 322.

The control unit 320 is an electronic circuit such as CPU or MPU, and includes a monitor unit 321, the command transfer unit 322 and the port setting unit 323.

The monitor unit 321 determines whether the structure of the enclosures connected to the expander has been changed. When determining that the structure of the enclosures connected to the expander has been changed, the monitor unit 321 notifies that BC (CHG) is to be issued to the command transfer unit 322.

When receiving BC (CHG) from any of the enclosures 10a to 10c, the command transfer unit 322 transmits the received BC (CHG) to a transmission destination designated by the BC (CHG) transmission destination table storage unit 312.

When the monitor unit 321 determines that the structure of the storage apparatus 1 has been changed, the command transfer unit 322 generates BC (CHG), and transmits the generated BC (CHG) to a transmission destination designated by the BC (CHG) transmission destination table storage unit 312.

Whenever the command transfer unit 322 transmits BC (CHG) once, it adds 1 to the "frequency of issues" in the BC (CHG) issue frequency table storage unit 313.

After the command transfer unit 322 updates the "frequency of issues" in the BC (CHG) issue frequency table storage unit 313, the control unit 320 performs a discovery processing on the lower enclosures, and acquires map information indicating the number of physical links and the number of devices connected to the physical links.

When the structure of the storage apparatus 1 is changed, the port setting unit 323 sets the BC (CHG) transmission destination table storage unit 312 to transmit BC (CHG) to the map CM 100. For example, when receiving an issue request from the map CM 100, the port setting unit 323 extracts a port number or a SAS address contained in the issue request, and sets the extracted port number or SAS address as a transmission destination stored in the BC (CHG) transmission destination table storage unit 312. Consequently, when the map information has been changed, the command transfer unit 322 transmits BC (CHG) to the map CM 100.

Processing procedure of processings by storage apparatus according to first embodiment

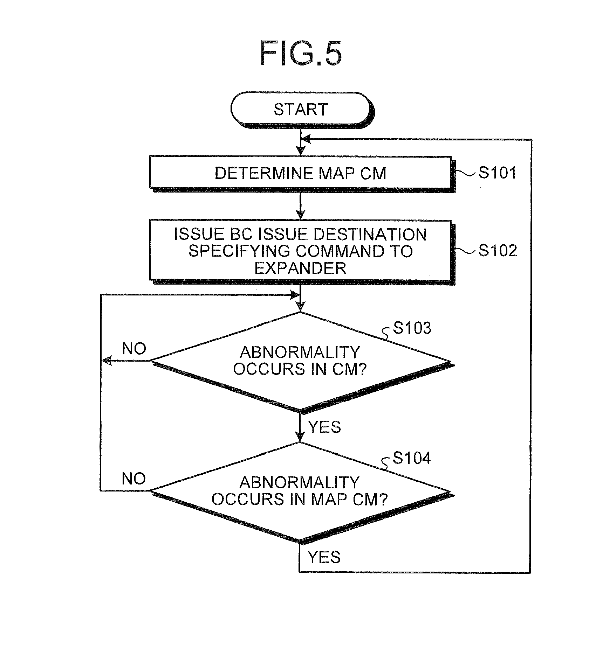

A processing procedure of the processings by the storage apparatus 1 according to the first embodiment will be described below with reference to FIGS. 5 to 9.

FIG. 5 is a flowchart illustrating a processing procedure by the storage apparatus according to the first embodiment. As illustrated in FIG. 5, the storage apparatus 1 determines the map CM 100 (step S101). Then, the map CM 100 transmits a BC issue destination specifying command to the expanders 300a and 300b (step S102).

The storage apparatus 1 monitors the CMs 100 and the 200a to 200c, and determines whether an abnormality has occurred (step S103). When determining that an abnormality has occurred in any CM (step S103, Yes), the storage apparatus 1 determines whether an abnormality has occurred in the map CM 100 (step S104).

When determining that an abnormality has occurred in the map CM 100 (step S104, Yes), the storage apparatus 1 proceeds to step S101 to determine a new map CM. On the other hand, when determining that an abnormality has not occurred in any CM (step S103, No) or when an abnormality has occurred in a CM other than the map CM 100 (step S104, No), the storage apparatus 1 proceeds to step S103.

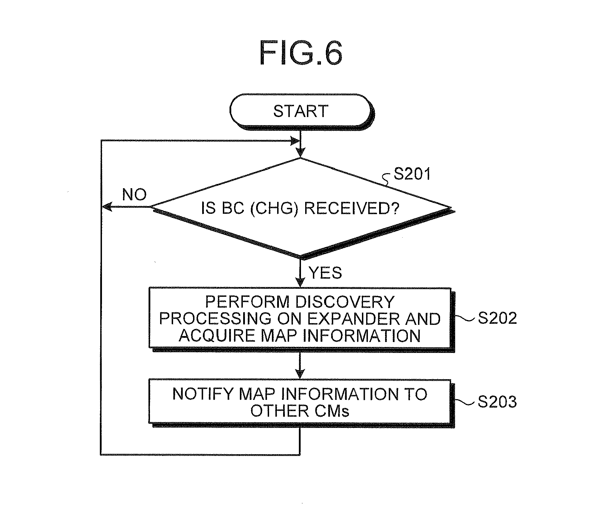

FIG. 6 is a flowchart illustrating a processing procedure of map information acquisition processings by the map CM according to the first embodiment. In the map CM 100, the control unit 120 starts the processings on receiving a command via any physical port 102a or 102b.

As illustrated in FIG. 6, the control unit 120 determines whether it has received BC (CHG) (step S201). When the control unit 120 determines that it has received BC (CHG) (step S201, Yes), the acquisition unit 122 performs a discovery processing on the expanders 300a and 300b to acquire map information (step S202). Then, the notification unit 124 notifies the map information to other CMs 200a to 200c (step S203).

When determining that the control unit 120 has not received BC (CHG) (step S201, No) or after the processing in step S203 has been terminated, the control unit 120 proceeds to step S201 to determine whether it has received BC (CHG).

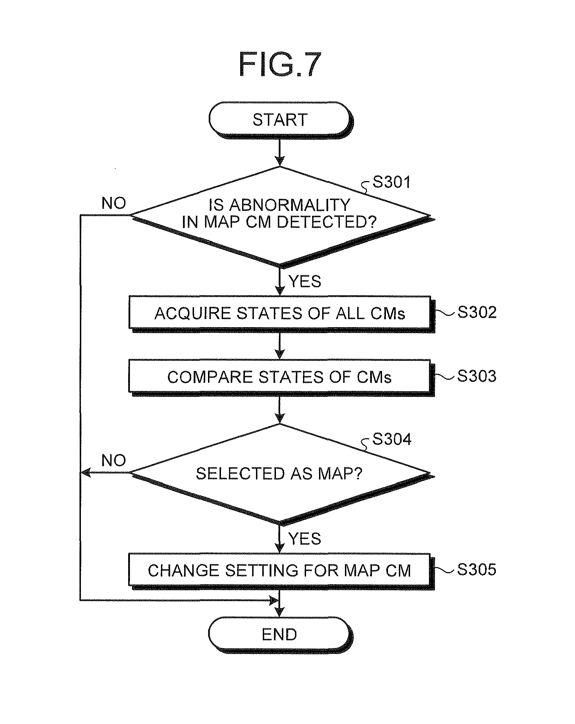

FIG. 7 is a flowchart illustrating a processing procedure of map CM change processings by the CM according to the first embodiment. For example, when detecting that an abnormality has occurred in any CM, the CM performs the following processings.

As illustrated in FIG. 7, in the CM 200, the abnormality detection unit 223 determines whether it has detected an abnormality in the map CM 100 (step S301). When the abnormality detection unit 223 determines that it has detected an abnormality in the map CM 100 (step S301, Yes), the setting unit 222 acquires the states of all the CMs (step S302).

The setting unit 222 compares the acquired states of the CMs (step S303). Subsequently, the setting unit 222 determines whether its CM has been selected as a map CM (step S304). When determining that the CM has been selected as a map CM (step S304, Yes), the setting unit 222 changes the setting for the map CM (step S305) and terminates the processing.

On the other hand, when determining that the CM has not been selected as a map CM (step S304, No) and when it is determined that an abnormality in the map CM 100 has not been detected (step S301, No), the setting unit 222 terminates the processing.

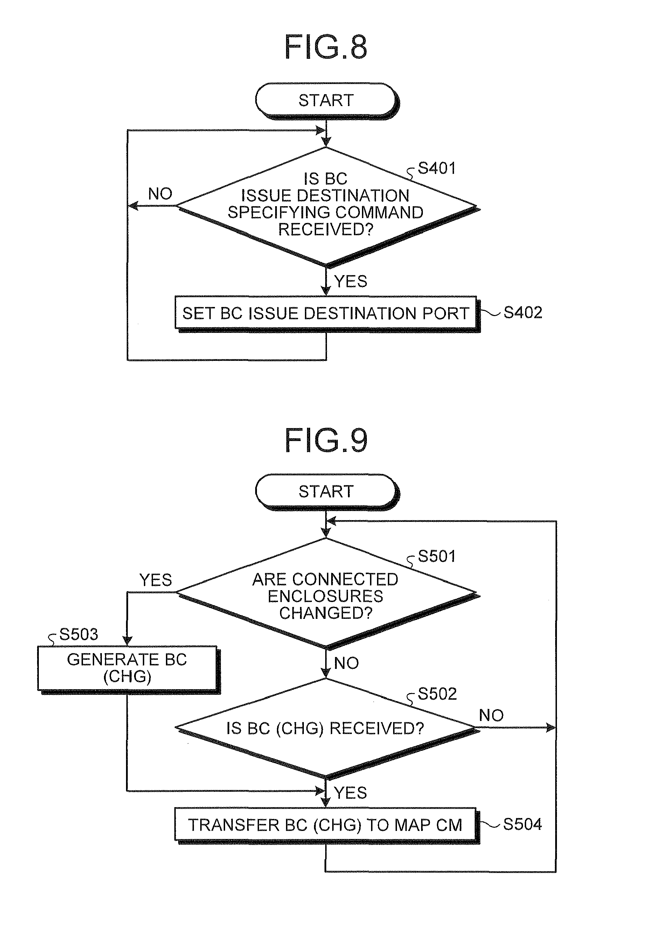

FIG. 8 is a flowchart illustrating a processing procedure of port setting processings by the expander according to the first embodiment. In the expander 300, the control unit 320 starts the processings on receiving a command via any of the physical ports 301a to 301c.

As illustrated in FIG. 8, the control unit 320 determines whether it has received a BC issue destination specifying command (step S401). When the control unit 320 determines that it has received a BC issue destination specifying command (step S401, Yes), the port setting unit 323 performs the following processings. That is, the port setting unit 323 sets a port to transfer BC (CHG) to a CM extracted by the received BC issue destination specifying command (step S402).

When determining that the control unit 320 has not received a BC issue destination specifying command (step S401, No) or after the processing in step S402 has been terminated, the control unit 320 proceeds to step S401 to determine whether it has received a BC issue destination specifying command.

FIG. 9 is a flowchart illustrating a processing procedure of BC (CHG) transfer processings by the expander according to the first embodiment. For example, the expander 300 constantly performs the processings after being powered on.

As illustrated in FIG. 9, the monitor unit 321 determines whether the enclosures connected to the expander 300 have been changed (step S501). When the monitor unit 321 determines that the enclosures connected to the expander 300 have been changed (step S501, Yes), the command transfer unit 322 generates BC (CHG) (step S503). Then, the command transfer unit 322 transfers the BC (CHG) to the map CM 100 (step S504).

On the other hand, when the monitor unit 321 determines that the enclosures connected to the expander 300 have not been changed (step S501, No), the control unit 320 performs the following processings. That is, the control unit 320 determines whether it has received BC (CHG) via any of the physical ports 302a to 302c (step S502).

When the control unit 320 determines that it has received BC (CHG) (step S502, Yes), the command transfer unit 322 transfers the BC (CHG) to the map CM 100 (step S504).

After the processing in step S504 has been terminated or when determining that the control unit 320 has not received BC (CHG) (step S502, No), the control unit 320 proceeds to step S501.

As described above, according to the first embodiment, when the structure of the storage apparatus 1 is changed, the map CM 100 acquires map information and notifies the acquired map information to the CMs 200a to 200c. Thereby, in the storage apparatus 1, the discovery processings are not concentrated on the expanders 300a and 300b.

In the storage apparatus 1, the map CM 100 transmits an issue request to each expander so that BC (CHG) is transmitted only to the map CM 100. Thereby, the expander does not need to transmit BC (CHG) to other CMs, thereby reducing communication loads.

Even when an abnormality occurs in the map CM 100 in the storage apparatus 1, a new map CM is set from among the CMs other than the map CM 100. Thus, even when an abnormality occurs in the map CM 100 in the storage apparatus 1, the discovery processings are not concentrated on the expanders.

### [b] Second embodiment

In the first embodiment, the map CM 100 transmits a command issue destination specifying command to the expanders 300a and 300b and requests to transmit BC (CHG) to the map CM 100. Even when the structure of the storage apparatus 1 is changed, each expander does not need to transmit BC (CHG) to the map CM 100 and the map CM 100 may ask each expander whether the structure of the storage apparatus 1 has been changed. There will be described a case in which even when the structure of the storage apparatus 1 is changed, the map CM 100 requests each expander not to transmit BC (CHG) in the second embodiment by way of example.

### Structure of storage apparatus according to second embodiment

A structure of a storage apparatus according to a second embodiment will be described. The structure of the storage apparatus according to the second embodiment is the same as the structure of the storage apparatus 1 according to the first embodiment illustrated in FIG. 1 except that the functions of the map CM and the expanders are different. Thus, an explanation will be made in the second embodiment by use of a map CM 400 and expanders 500a and 500b.

### Structure of map CM according to second embodiment

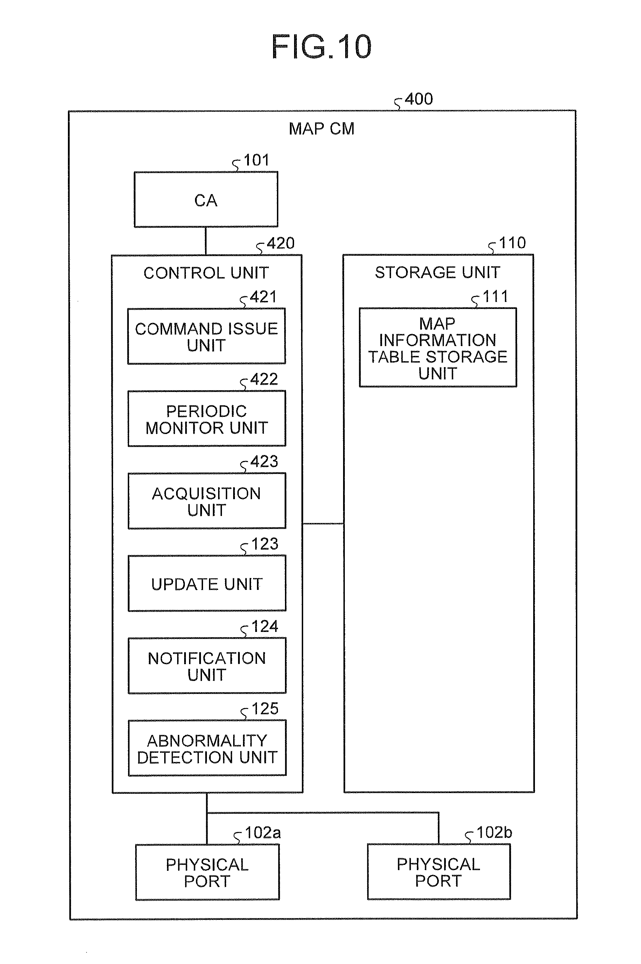

A structure of the map CM 400 according to the second embodiment will be described with reference to FIG. 10. FIG. 10 is a functional block diagram illustrating a functional structure of the map CM according to the second embodiment. In the figure, only the structure relating to the functions set for the map CM is illustrated.

The map CM 400 according to the second embodiment includes the CA 101, the physical ports 102a, 102b, the storage unit 110 and a control unit 420. The functions serving the same roles as those in the respective units illustrated in FIG. 2 are denoted with the same reference numerals and their detailed description will not be repeated.

The control unit 420 is an electronic circuit such as CPU or MPU, and includes a command issue unit 421, a periodic monitor unit 422, an acquisition unit 423, the update unit 123, the notification unit 124 and the abnormality detection unit 125.

When the structure of the storage apparatus 1 is changed, the command issue unit 421 transmits, to the expanders 500a and 500b, a prohibition request of prohibiting BC (CHG) indicating that the structure of the storage apparatus 1 has been changed from being issued to the map CM and other CMs. For example, the command issue unit 421 may transmit, to each expander, a prohibition request containing an identifier of the map CM such as SAS address, or a port number.

The periodic monitor unit 422 periodically monitors the expanders 500a and 500b, and determines whether the structure of the storage apparatus 1 has been changed. For example, the periodic monitor unit 422 reads the frequency of command issues of the expanders 500a and 500b per predetermined time. Then, the periodic monitor unit 422 determines whether the map information of the expanders 500a and 500b has been changed based on the values of the read frequency of issues and the previously-read frequency of issues. When determining that the map information of the expanders 500a and 500b has been changed, the periodic monitor unit 422 notifies, to the acquisition unit 423, that map information is to be acquired.

When the structure of the storage apparatus 1 has been changed, the acquisition unit 423 acquires new map information from the expanders 500a and 500b. For example, when the periodic monitor unit 422 determines that the structure of the storage apparatus 1 has been changed, the acquisition unit 423 acquires new map information from the expanders 500a and 500b. The acquisition unit 423 outputs the acquired new map information to the update unit 123 and the notification unit 124.

### Structure of expander according to second embodiment

A structure of the expander according to the second embodiment will be described below. The structure of the expander according to the second embodiment is the same as the structure of the expander according to the first embodiment illustrated in FIG. 4 except that part of the operations by the port setting unit 323 is different. Thus, the structure of the expander according to the second embodiment will be described with reference to FIG. 4 in which the port setting unit 323 is replaced with a port setting unit 523.

When the structure of the storage apparatus 1 has been changed, the port setting unit 523 sets the BC (CHG) transmission destination table storage unit 312 to prohibit BC (CHG) from being transmitted to the map CM 400 and the CMs 200a to 200c. For example, when receiving the prohibition request from the map CM 400, the port setting unit 523 erases a port number or a SAS address set in the BC (CHG) transmission destination table storage unit 312. Consequently, when the map information is changed, the command transfer unit 322 transmits BC (CHG) to neither the map CM 400 or each CM.

### Processing procedure of processings by storage apparatus according to second embodiment

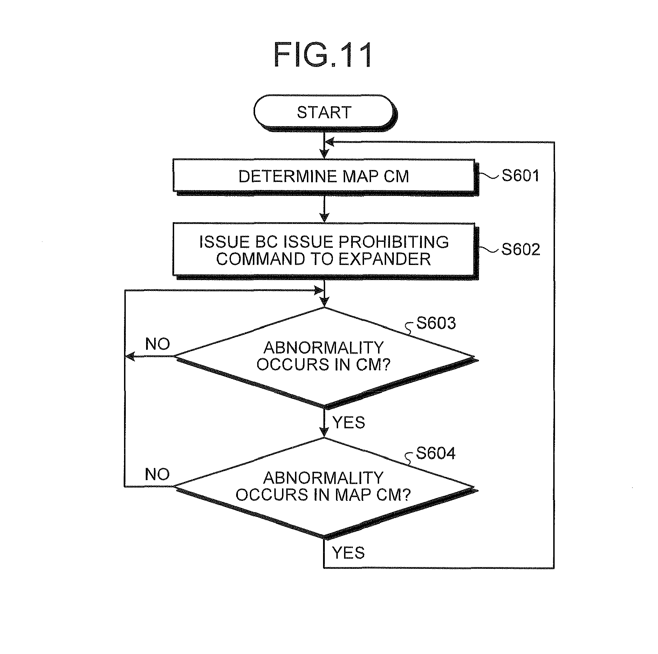

A processing procedure of the processings by the storage apparatus according to the second embodiment will be described below with reference to FIGS. 11 to 14.

FIG. 11 is a flowchart illustrating the processing procedure by the storage apparatus according to the second embodiment. As illustrated in FIG. 11, the storage apparatus 1 determines a map CM 400 (step S601). Then, the map CM 400 transmits a BC issue prohibiting command to the expanders 500a and 500b (step S602).

The storage apparatus 1 monitors the CMs 400 and the 200a to 200c, and determines whether an abnormality has occurred (step S603). When determining that an abnormality has occurred in any CM (step S603, Yes), the storage apparatus 1 determines whether an abnormality has occurred in the map CM 400 (step S604).

When determining that an abnormality has occurred in the map CM 400 (step S604, Yes), the storage apparatus 1 proceeds to step S601 to determine a map CM. On the other hand, when determining that an abnormality has not occurred in any CM (step S603, No) or when determining that an abnormality has occurred in a CM other than the map CM 400 (step S604, No), the storage apparatus 1 proceeds to step S603.

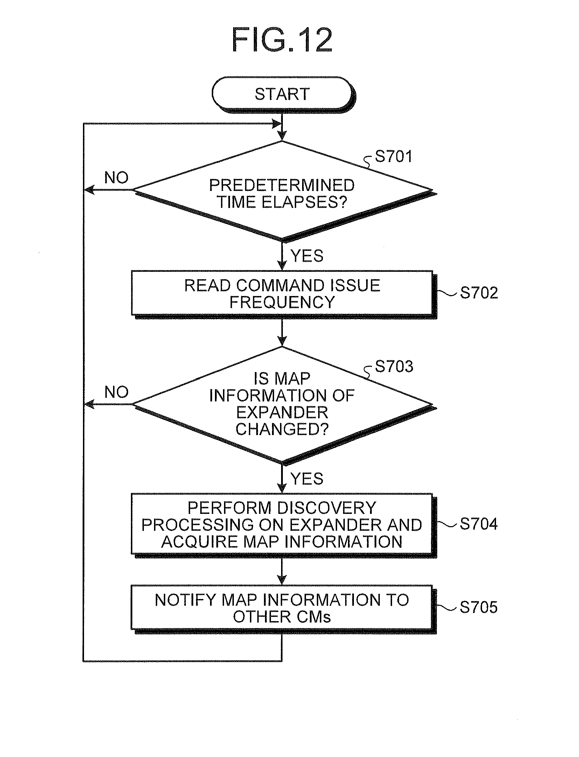

FIG. 12 is a flowchart illustrating a processing procedure of map information acquisition processings by the map CM according to the second embodiment. In the map CM 400, the control unit 420 is powered on and then performs the processings per predetermined time.

As illustrated in FIG. 12, the control unit 420 determines whether a predetermined time has elapsed (step S701). When the control unit 420 determines that a predetermined time has elapsed (step S701, Yes), the periodic monitor unit 422 reads the frequency of command issues by the expanders 500a and 500b (step S702). When determining that a predetermined time has not elapsed (step S701, No), the control unit 420 waits until a predetermined time elapses.

The periodic monitor unit 422 determines whether the map information of the expanders 500a and 500b has been changed based on the read value of the frequency of issues (step S703). When the periodic monitor unit 422 determines that the map information of the expanders 500a and 500b has been changed (step S703, Yes), the acquisition unit 423 performs a discovery processing on the expanders and acquires map information (step S704).

The notification unit 124 notifies the map information to other CMs 200a to 200c (step S705). When the periodic monitor unit 422 determines that the map information has not been changed (step S703, No) or after the processing in step S705 has been terminated, the control unit 420 proceeds to step S701 to determine whether a predetermined time has elapsed.

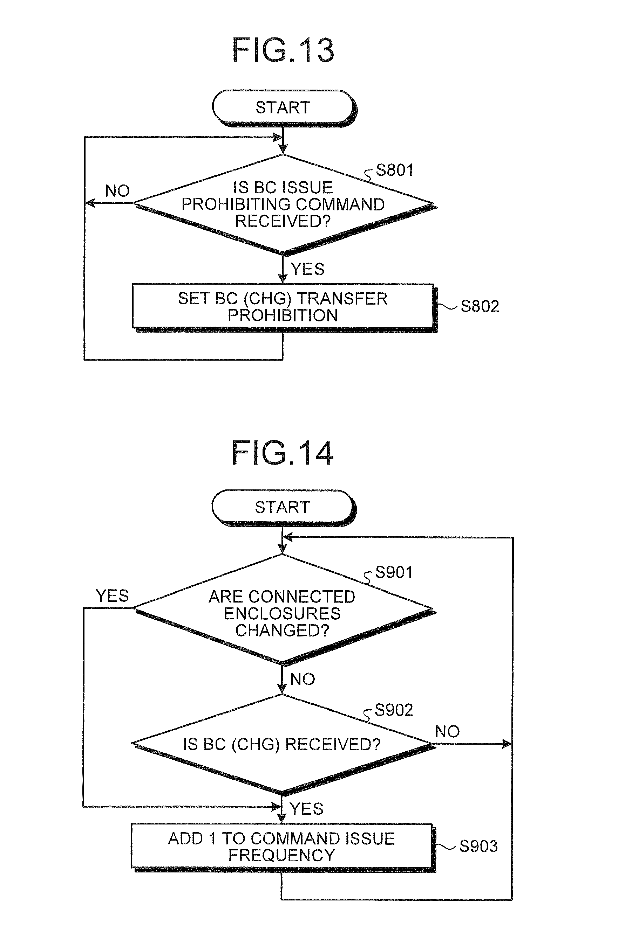

FIG. 13 is a flowchart illustrating a processing procedure of port setting processings by the expander according to the second embodiment. In a expander 500, a control unit 520 starts the processings on receiving a command via any of the physical ports 301a to 301c.

As illustrated in FIG. 13, the control unit 520 determines whether it has received a BC issue prohibiting command (step S801). Then, when the control unit 520 determines that it has received a BC issue prohibiting command (step S801, Yes), the port setting unit 523 sets to prohibit BC (CHG) from being transferred (step S802).

When determining that the control unit 520 has not received a BC issue prohibiting command (step S801, No) or after the processing in step S802 has been terminated, the control unit 520 proceeds to step S801 to determine whether it has received a BC issue prohibiting command.

FIG. 14 is a flowchart illustrating a processing procedure of BC (CHG) transfer prohibition processings by the expander according to the second embodiment. For example, the expander 500 is powered on and then periodically performs the processings.

As illustrated in FIG. 14, the monitor unit 321 determines whether the enclosures connected to the expander 500 have been changed (step S901). When the monitor unit 321 determines that the enclosures connected to the expander 500 have not been changed (step S901, No), the control unit 520 performs the following processings. That is, the control unit 520 determines whether it has received BC (CHG) via any of the physical ports 302a to 302c (step S902).

When the control unit 520 determines that it has received BC (CHG) (step S902, Yes), the command transfer unit 322 performs the following processings. That is, the command transfer unit 322 adds 1 to the frequency of command issues stored in the BC (CHG) issue frequency table storage unit 313 (step S903). When the monitor unit 321 determines that the enclosures connected to the expander 500 have been changed (step S901, Yes), the command transfer unit 322 adds 1 to the frequency of command issues stored in the BC (CHG) issue frequency table storage unit 313.

After the processing in step S903 has been terminated or when determining that the control unit 520 has not received BC (CHG) (step S902, No), the control unit 520 proceeds to step S901.

### Effects of second embodiment

As described above, according to the second embodiment, when determining that the structure of the storage apparatus 1 has been changed, the map CM 400 acquires map information and notifies the acquired map information to the CMs 200a to 200c. Thereby, in the storage apparatus 1, the discovery processing is not concentrated on the expanders 300a and 300b.

In the storage apparatus 1, the map CM 400 prohibits each expander from issuing BC (CHG). The map CM 400 monitors the frequency of BC (CHG) issues of each expander, and determines whether the structure of the storage apparatus 1 has been changed. Thereby, each expander may transmit BC (CHG) to neither the map CM 400 or other CMs, thereby reducing communication loads.

### [c] Third embodiment

There has been described in the first embodiment the case in which the map CM 100 requests each expander to transmit BC (CHG) only to the map CM 100 by way of example. There has been described in the second embodiment the case in which the map CM 400 requests each expander to transmit BC (CHG) to neither the map CM 400 or other CMs by way of example. When the map CM is changed in the storage apparatus 1, a changed map CM may transmit a different request from that of the not-changed map CM to each expander. There will be described in a third embodiment a case in which a request of issuing BC (CHG) or a request of prohibiting BC (CHG) from being issued are switched per map CM by way of example.

### Structure of storage apparatus according to third embodiment

A structure of a storage apparatus according to the third embodiment will be described. The structure of the storage apparatus according to the third embodiment is the same as the structure of the storage apparatus 1 according to the first embodiment illustrated in FIG. 1 except that the functions of the map CM and the expanders are different. Thus, in the third embodiment, an explanation will be made by use of a map CM 600 and expanders 700a and 700b.

### Structure of map CM according to third embodiment

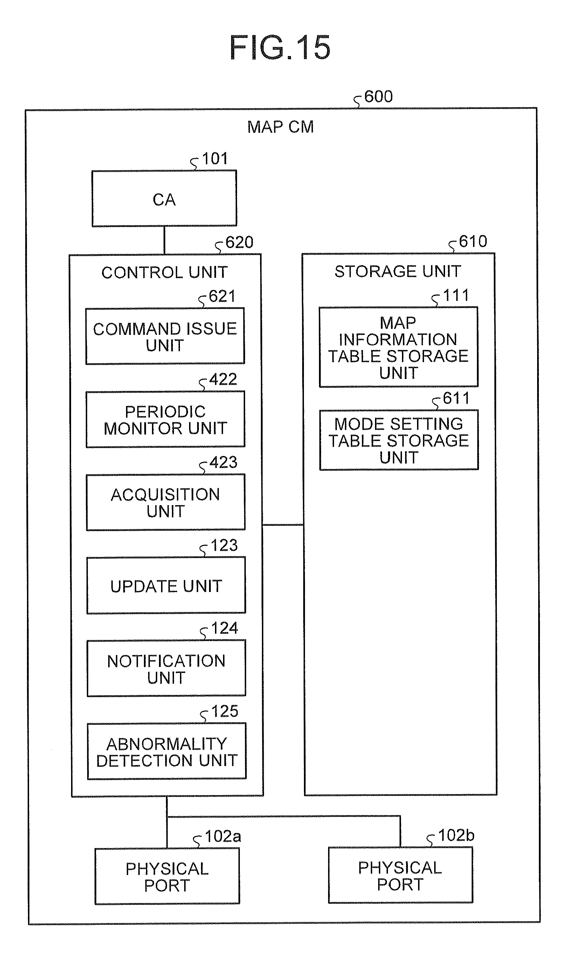

A structure of the map CM 600 according to the third embodiment will be described with reference to FIG. 15. FIG. 15 is a functional block diagram illustrating a functional structure of the map CM according to the third embodiment. In the figure, only the structure relating to the functions set for the map CM will be illustrated.

The map CM 600 according to the third embodiment includes the CA 101, the physical ports 102a, 102b, a storage unit 610 and a control unit 620. The functions serving the same roles as those of the respective units illustrated in FIG. 2 or FIG. 10 are denoted with the same reference numerals and their detailed description will not be repeated.

The storage unit 610 is a semiconductor memory device such as RAM, and includes the map information table storage unit 111 and a mode setting table storage unit 611. The mode setting table storage unit 611 stores therein information indicating which the mode is of an issue request mode of issuing BC (CHG) only to the map CM or a prohibition request mode of prohibiting BC (CHG) from being issued to the map CM and other CMs. For example, the mode setting table storage unit 611 stores "1" in the issue request mode and "0" in the prohibition request mode.

The control unit 620 is an electronic circuit such as CPU or MPU, and includes a command issue unit 621, the periodic monitor unit 422, the acquisition unit 423, the update unit 123, the notification unit 124 and the abnormality detection unit 125.

The command issue unit 621 determines a mode of the map CM with reference to the mode setting table storage unit 611, and transmits a command corresponding to the determined mode to the expanders 700a and 700b. For example, when determining that "1" indicating that the issue request mode is set is stored in the mode setting table storage unit 611, the command issue unit 621 transmits, to each expander, an issue request of issuing BC (CHG) only to the map CM. When determining that "0" indicating that the prohibition request mode is set is stored in the mode setting table storage unit 611, the command issue unit 621 transmits, to each expander, a prohibition request of prohibiting BC (CHG) from being issued to the map CM and other CMs.

### Structure of expander according to third embodiment

A structure of the expander according to the third embodiment will be described below. The structure of the expander according to the third embodiment is the same as the structure of the expander according to the first embodiment illustrated in FIG. 4 except that part of the operations by the port setting unit 323 is different. Thus, the structure of the expander according to the third embodiment will be described with reference to FIG. 4 in which the port setting unit 323 is replaced with a port setting unit 723.

When receiving an issue request from the map CM 600, the port setting unit 723 extracts a port number or a SAS address contained in the issue request, and sets the extracted port number or SAS address as a transmission destination to be stored in the BC (CHG) transmission destination table storage unit 312. Consequently, when the map information is changed, the command transfer unit 322 transmits BC (CHG) to the map CM 600.

When receiving a prohibition request from the map CM 600, the port setting unit 723 erases the port number or SAS address set in the BC (CHG) transmission destination table storage unit 312. Consequently, when the map information is changed, the command transfer unit 322 transmits BC (CHG) to neither the map CM 600 or each CM.

### Processing procedure of processings by storage apparatus according to third embodiment

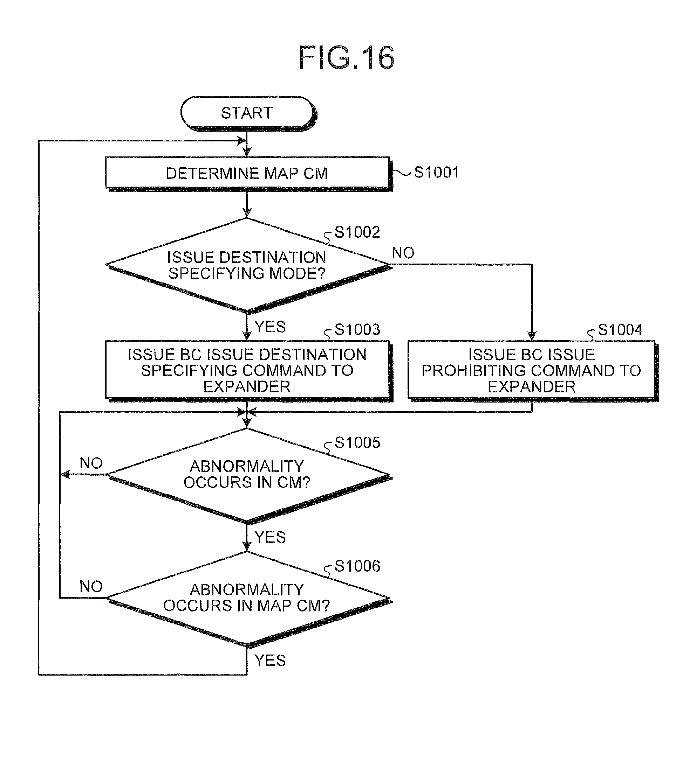

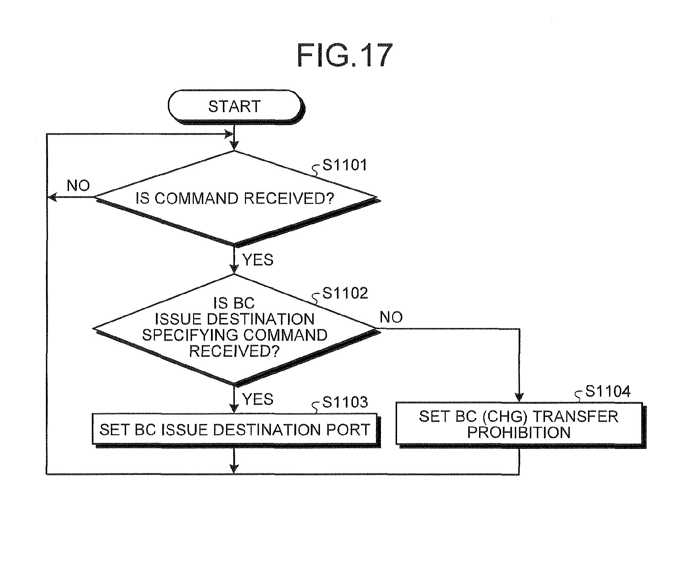

A processing procedure of the processings by the storage apparatus 1 according to the third embodiment will be described below with reference to FIGS. 16 and 17.

FIG. 16 is a flowchart illustrating the processing procedure by the storage apparatus according to the third embodiment. As illustrated in FIG. 16, the storage apparatus 1 determines the map CM 600 (step S1001). Then, the map CM 600 determines whether the mode is the issue destination specifying mode with reference to the mode setting table storage unit 611 (step S1002).

When determining that the mode is the issue destination specifying mode (step S1002, Yes), the map CM 600 transmits a BC issue destination specifying command to a expander 700 (step S1003). On the other hand, when determining that the mode is not the issue destination specifying mode (step S1002, No), the map CM 600 transmits a BC issue prohibiting command to the expander 700 (step S1004).

The storage apparatus 1 monitors the CMs 600 and 200a to 200c, and determines whether an abnormality has occurred (step S1005). When determining that an abnormality has occurred in any CM (step S1005, Yes), the storage apparatus 1 determines whether an abnormality has occurred in the map CM 600 (step S1006).

When determining that an abnormality has occurred in the map CM 600 (step S1006, Yes), the storage apparatus 1 proceeds to step S1001 to determine a map CM. On the other hand, when determining that an abnormality has not occurred in any CM (step S1005, No) or when an abnormality has occurred in a CM other than the map CM 600 (step S1006, No), the storage apparatus 1 proceeds to step S1005.

FIG. 17 is a flowchart illustrating a processing procedure of port setting processings by the expander according to the third embodiment. In the expander 700, a control unit 720 starts the processings on receiving a command via any of the physical ports 301a to 301c.

As illustrated in FIG. 17, the control unit 720 determines whether it has received a command (step S1101). When determining that the control unit 720 has received a command (step S1101, Yes), the control unit 720 determines whether it has received a BC issue destination specifying command (step S1102)

Then, when the control unit 720 determines that it has received a BC issue destination specifying command (step S1102, Yes), the port setting unit 723 performs the following processings. That is, the port setting unit 723 sets a port to transfer BC (CHG) to a CM extracted by the received BC issue destination specifying command (step S1103).

On the other hand, when the control unit 720 determines that is has not received a BC issue destination specifying command (step S1102, No), the port setting unit 723 sets to prohibit BC (CHG) from being transferred (step S1104).

When determining that the control unit 720 has not received a command (step S1101, No) and after the processing in step S1103 or in step S1104 has been terminated, the control unit 720 proceeds to step S1101 to determine whether it has received a command.

### Effect of third embodiment

As described above, according to the third embodiment, the command issue unit 621 determines information to be stored in the mode setting table storage unit 611, thereby setting the BC (CHG) issue mode per map CM.

### [d] Fourth embodiment

The present invention may be implemented in various different forms other than the above embodiments. Thus, a fourth embodiment will be described as other embodiment encompassed in the present invention.

### System structure and others

All or part of the processings described as being automatically performed, among the processings described in the present embodiment, may be manually performed. Alternatively, all or part of the processings described as being manually performed may be automatically performed in a well-known method. In addition, the processing procedures, the control procedures and the specific names described in the specification and the drawings may be arbitrarily changed unless otherwise stated. The information stored in the storage unit is merely exemplary, and does not necessarily need to be stored as described.

The storage apparatus 1 has been described as employing a self-discovery mode, but is not limited thereto. For example, each expander and each enclosure in the storage apparatus 1 may employ a non-self-discovery mode in which the map information is registered and updated by the CM. When the non-self-discovery mode is employed, the map CM 100 acquires new map information from the expanders 300a, 300b and the enclosures 10a to 10c, 20a to 20c, 30a to 30c.

The map CM has been described as being set by a manager on the startup of the storage apparatus 1, but is not limited thereto. For example, on the startup of the storage apparatus 1, the respective CMs may mutually exchange the states of the CMs and a CM among the CMs may be selected as a map CM based on the acquired states of the CMs.

The illustrated respective constituents are functionally conceptual, and do not necessarily need to be physically configured as illustrated. For example, the map CM 100 may integrate the acquisition unit 122 and the update unit 123 therein. Further, all or any part of the respective processing functions performed in each device may be realized in a CPU or in a program analyzed and executed in the CPU, or may be realized in wired logic hardware.

According to an embodiment, it is possible to prevent discovery processings from concentrating on an expander.

## Claims

1. A storage apparatus (1) comprising a storage device (10a∼10c, 20a∼20c, 30a∼30c), a plurality of control devices (100, 200a∼200c) that control an access from an external device to the storage device (10a∼10c, 20a∼20c, 30a∼30c), and a relay device (300a, 300b) that is connected to the plurality of control devices (100, 200a∼200c) and relays an access from the plurality of control devices (100, 200a∼200c) to the storage device (10a∼10c, 20a∼20c, 30a∼30c),
wherein the plurality of control devices (100, 200a∼200c) each comprise:
a first control device (100) including:
a storage unit (110) that stores structure information indicating a structure of the storage apparatus (1);
an acquisition unit (122) that, when the structure is changed, acquires new structure information from the relay device (300a, 300b) or from the relay device (300a, 300b) and the storage device (10a∼10c, 20a∼20c, 30a∼30c);
an update unit (123) that updates the structure information stored in the storage unit (110) based on the acquired new structure information; and
a notification unit (124) that notifies the acquired new structure information to other control devices (200a∼200c) ; and
a second control device (200a∼200c) including:
a storage unit (210) that stores the structure information indicating the structure of the storage apparatus (1); and
an update unit (221) that updates the structure information stored in the storage unit (210) based on the new structure information notified by the first control device (100).

2. The storage apparatus (1) according to claim 1,
wherein the first control device (100) further comprises an issue request unit (121) that, when the structure is changed, transmits, to the relay device (300a, 300b), an issue request of issuing a change notification indicating that the structure has been changed only to the first control device (100),
the relay device (300a, 300b) comprises a transmission unit (322) that, when receiving an issue request from the issue request unit (121) in the first control device (100) and when the structure is changed, transmits the change notification to the first control device (100), and
when receiving the change notification from the relay device (300a, 300b), the acquisition unit (122) in the first control device (100) acquires new structure information from the relay device (300a, 300b) or from the relay device (300a, 300b) and the storage device (10a∼10c, 20a∼20c, 30a∼30c).

3. The storage apparatus (1) according to claim 1,
wherein the first control device (100) further comprises:
a prohibition request unit (421) that, when the structure is changed, transmits, to the relay device (300a, 300b), a prohibition request indicating prohibition of issuing the change notification indicating that the structure has been changed to the first control device (100) and the second control device (200a∼200c); and
a determination unit (422) that periodically monitors the relay device (300a, 300b) and determines whether the structure is changed,
the relay device (300a, 300b) further comprises a prohibition unit (523) that, when receiving the prohibition request from the prohibition request unit (421) in the first control device (100) and when the structure is changed, prohibits the change notification to the first control device (100) and the second control device (200a∼200c), and
when the determination unit (422) determines that the structure is changed, the acquisition unit (122) in the first control device (100) acquires new structure information from the relay device (300a, 300b) or from the relay device (300a, 300b) and the storage device (10a∼10c, 20a∼20c, 30a∼30c).

4. The storage apparatus (1) according to any one of claims 1 to 3,
wherein the second control device (200a∼200c) further comprises a setting unit (222) that, when an abnormality occurs in the first control device (100), selects a normally-operable device from the control devices (200a∼200c) other than the first control device (100) and sets the normally-operable device as the first control device (100).

5. A method for controlling a storage apparatus (1), the storage apparatus (1) comprising a storage device (10a∼10c, 20a∼20c, 30a∼30c), a plurality of control devices (100, 200a∼200c) that control an access from an external device to the storage device (10a∼10c, 20a∼20c, 30a∼30c), and a relay device (300a, 300b) that is connected to the plurality of control devices (100, 200a∼200c) and relays an access from the plurality of control devices (100, 200a∼200c) to the storage device (10a∼10c, 20a∼20c, 30a∼30c), the method comprising:
when a structure of the storage apparatus (1) is changed, newly acquiring structure information indicating the structure of the storage apparatus (1) from the relay device (300a, 300b) or from the relay device (300a, 300b) and the storage device (10a∼10c, 20a∼20c, 30a∼30c), using a first control device (100) in the plurality of control devices (100, 200a∼200c);
updating structure information stored in the storage unit (110) based on the acquired new structure information, using the first control device (100); and
notifying the acquired new structure information to other control devices (200a∼200c), using the first control device (100), and
updating the structure information stored in the storage unit (210) based on the new structure information notified by the first control device (100), using a second control device (200a∼200c) in the plurality of control devices (100, 200a∼200c).
